# FASCICULE DE BREVET EUROPEEN

(11) **EP 4 473 384 B1**
(45) Date de publication et mention de la délivrance du brevet: **30.09.2026**
(21) Numéro de dépôt: 23700898.2
(22) Date de dépôt: 18.01.2023
(51) Int. Cl.: G06F 3/01, A61H 3/06

(54) **SYSTÈME D'AIDE À L'ORIENTATION COMPRENANT DES MOYENS D'ACQUISITION D'UN ENVIRONNEMENT VISUEL RÉEL OU VIRTUEL, DES MOYENS D'INTERFACE HOMME-MACHINE NON VISUELLE ET DES MOYENS DE TRAITEMENT DE LA REPRÉSENTATION NUMÉRIQUE DUDIT ENVIRONNEMENT VISUEL**
ORIENTIERUNGSHILFESYSTEM MIT MITTEL ZUR ERFASSUNG EINER REALEN ODER VIRTUELLEN VISUELLEN UMGEBUNG, NICHTVISUELLE MENSCH-MASCHINE-SCHNITTSTELLE
ORIENTATION ASSISTANCE SYSTEM COMPRISING MEANS FOR ACQUIRING A REAL OR VIRTUAL VISUAL ENVIRONMENT, NON-VISUAL HUMAN-MACHINE INTERFACE MEANS AND MEANS FOR PROCESSING THE DIGITAL REPRESENTATION OF SAID VISUAL ENVIRONMENT

(30) Priorité: 01.02.2022 FR 2200877
(43) Date de publication de la demande: 11.12.2024
(73) Titulaire: Artha France, 78000 Versailles (FR)
(72) Inventeur: DU CHALARD, Rémi, 92100 BOULOGNE-BILLANCOURT (FR); BUGUET, Amaury, 78000 VERSAILLES (FR); DE PUYSEGUR, Gabrielle, 72800 DISSE-SOUS-LE-LUDE (FR); DU CHALARD, Wandrille, 78000 VERSAILLES (FR); OUTTERS, François, 78000 VERSAILLES (FR); NATAF, Zacharie, 92210 SAINT-CLOUD (FR)
(74) Mandataire: IP Trust
(86) Numéro de dépôt international: PCT/EP2023/051121
(87) Numéro de publication internationale: WO 2023/147996

(56) Documents cités:
- WO-A1-2017/151245
- US-A1- 2008 120 029
- US-A1- 2013 201 308
- US-A1- 2019 332 175

## Description

### Domaine de l'invention

La présente invention concerne le domaine de l'aide à l'orientation de personnes souffrant de déficiences visuelles ou de personnes se déplaçant dans des environnements de très faible visibilité, par exemple des pompiers se déplaçant dans un bâtiment enfumé ou des militaires se déplaçant dans l'obscurité.

On connaît différentes solutions, qui vont de l'assistance d'un chien-guide au marquage du sol par des bandes d'aide à l'orientation, l'implantation de balises sonores, ou encore de cannes permettant de détecter les obstacles.

On a aussi proposé d'utiliser la transmission d'information par un mode haptique, par exemple sous la forme d'un bracelet connecté. La technologie haptique utilise le sens du toucher pour faire passer une information. La société WearWorks propose un bracelet intelligent nommé "Wayband", pour guider les aveugles. L'utilisateur commence par télécharger une application sur un téléphone intelligent associé et énonce l'adresse souhaitée. Le bracelet relié à un système GPS guide l'utilisateur à destination. Quand l'utilisateur se trompe d'itinéraire, le bracelet vibre. Il cesse de vibrer une fois sur le droit chemin. Le langage tactile, sensible, plus intuitif et peu intrusif, soulage l'ouïe, sens sur-sollicité chez les malvoyants.

La demanderesse a elle-même breveté par le brevet FR3100636B1 un système d'aide à l'orientation comprenant des moyens d'acquisition d'un environnement visuel réel ou virtuel, des moyens d'interface homme-machine non visuelle et des moyens de traitement de la représentation numérique dudit environnement visuel pour fournir un signal électrique de commande d'une interface constitués par un bracelet présentant une zone haptique unique d'une surface comprise entre 60x60 millimètres et 150x150 millimètres, avec un ensemble de picots actifs de NxM ou N est compris entre 5 et 100 et M est compris entre 10 et 100, lesdits moyens de traitement de la représentation numérique consistant à extraire périodiquement au moins un motif numérique d'activation impulsionnel d'un sous-ensemble des picots de ladite zone haptique. Pour augmenter la surface de la zone haptique on a aussi proposé des ceintures actives.

### Etat de la technique

La demande de brevet WO2018058936A1 propose une ceinture de guidage pour aveugles comprenant un module radar laser disposé sur la ceinture et configuré pour détecter un environnement environnant et pour former des informations de position d'un objet mesuré. Un dispositif de commande reçoit et traite les informations de position de l'objet mesuré détecté par le module radar laser et forme une instruction d'alerte; et un système d'alerte qui est commandé par l'instruction d'alerte pour délivrer des informations d'alerte concernant une condition d'environnement ambiant. Le porteur porte une ceinture de guidage aveugle, c'est-à-dire que le corps de ceinture de la ceinture de guidage aveugle est porté à la taille, et la direction dans laquelle l'utilisateur avance pendant la marche peut être définie comme l'avant du corps de la taille ceinture, et la direction dans laquelle l'utilisateur utilise le dos est définie comme Sur le dos du corps de ceinture, le deuxième module lidar est disposé à l'avant du corps de ceinture. Dans le processus d'utilisation du personnel, par rapport à d'autres informations de direction, il est plus important d'utiliser les informations de direction du personnel dans le sens de l'avancement. Par conséquent, le deuxième module radar laser peut être placé à l'avant du corps de la ceinture, et l'avant peut être une plage. Par exemple, le corps de la ceinture est également divisé en une première partie et une seconde partie, la première partie étant la partie avant du corps de ceinture, et la seconde partie étant la partie arrière du corps de ceinture. Le second module radar laser peut être disposé à n'importe quelle position sur l'avant du corps de ceinture. Facultativement, la position centrale de la première partie du corps de ceinture est déterminée à l'avance, et le second module de radar laser est disposé au centre de la première partie du corps de ceinture, de sorte que le second module de radar laser balaye la route condition du cap de l'utilisateur dans une plage plus large.

La demande de brevet WO2021/099993 décrit un autre exemple de dispositif d'aide à l'orientation pour des personnes malvoyantes, comprenant une pluralité d'éléments de signalisation vibrants applicables à un élément support, tel qu'une ceinture ou similaire, à porter au niveau de la taille par un utilisateur, au moins l'un desdits éléments de signalisation étant conçu pour être positionné vers le côté droit de l'utilisateur et au moins l'un desdits éléments de signalisation étant adapté pour être positionné vers le côté gauche de l'utilisateur, le dispositif comprenant une unité de localisation munie d'une antenne. Ladite unité de localisation est logée dans un boîtier dédié et séparé des éléments de signalisation et pourvu de moyens de fixation au corps de l'utilisateur et/ou d'un chien-guide dans une position éloignée de l'élément support, les éléments de signalisation étant pourvus d'au moins une unité d'émission-réception pour la connexion avec ladite unité de localisation.

La demande de brevet US20130201308A1 concerne un dispositif de guidage intelligent et son procédé visent à aider les personnes aveugles à percevoir leur environnement. Ce dispositif comprend un mécanisme de détection, un contrôleur de microprocesseur, un dispositif de toucher d'image et des systèmes d'indication.

Le mécanisme de détection utilise des caméras et des capteurs ultrasonores. Les caméras capturent des images en noir et blanc, que le contrôleur analyse pour extraire les contours des objets. Ces contours sont convertis en signaux en série, transmis ensuite au dispositif de toucher d'image. Ce dernier transforme les signaux en stimuli tactiles mécaniques, permettant à l'utilisateur de percevoir les formes des objets par le toucher.

Les capteurs ultrasonores mesurent la position et la distance des objets environnants. Le contrôleur traite ces données pour déterminer une distance précise et une direction sécurisée pour éviter les obstacles, puis transmet ces informations aux systèmes d'indication. Ces derniers, grâce à des vibrations ou des signaux vocaux, informent l'utilisateur sur les obstacles et la direction à suivre.

Le procédé consiste à :
1. Capturer une image en noir et blanc et extraire ses contours pour générer des signaux des formes d'objets.
2. Convertir ces signaux en stimuli tactiles mécaniques, permettant à l'utilisateur de percevoir les formes des objets.

La demande de brevet US2019332175 décrit un dispositif de vision haptique électronique portable configuré pour être fixé à un utilisateur ou porté par celui-ci. Le dispositif de vision haptique électronique portable est conçu pour fournir une rétroaction haptique avec de l'air sous pression sur la peau de l'utilisateur en fonction des objets détectés dans l'environnement de l'utilisateur. Les informations concernant les objets détectés dans l'environnement sont capturées à l'aide d'une caméra numérique, d'un radar et/ou d'un sonar, et/ou d'un dispositif de capture 3D tel qu'un scanner 3D ou une caméra 3D fixé au dispositif de vision haptique électronique portable. Le dispositif de vision haptique électronique portable est réalisé sous la forme d'un casque avec au moins deux caméras placées à la position des yeux de l'utilisateur, ou sous la forme d'un t-shirt ou d'un autre objet portable.

### Inconvénients de l'art antérieur

Ces solutions ne fournissent que des informations très limitées et ne permettent pas à l'utilisateur de se faire une représentation suffisante de l'environnement dans lequel il évolue.

En particulier, de percevoir les distances des obstacles, leur étendue et leur hauteur ce qui conduit à un sentiment permanent d'insécurité rendant très pénible tout déplacement.

### Solution apportée par l'invention

Afin de remédier aux inconvénients de l'art antérieur, la présente invention concerne selon son acception la plus générale un système d'aide à l'orientation comprenant des moyens d'acquisition d'un environnement visuel réel ou virtuel, des moyens d'interface homme-machine non visuelle et des moyens de traitement de la représentation numérique dudit environnement visuel pour fournir un signal électrique de commande d'une interface haptique, lesdits moyens de traitement de la représentation numérique consistant à extraire périodiquement au moins un motif numérique d'activation impulsionnel d'un sous-ensemble des picots de ladite zone haptique caractérisé en ce que
▪ ladite interface haptique est constituée par une ceinture lombaire présentant une surface active de NxM actionneurs, de préférence des solénoïdes, N et M étant des nombres entiers supérieurs ou égal à 10,
▪ et en ce que ledit moyen de traitement fourni pour chaque acquisition dudit environnement visuel une séquence de P trames d'activation desdits actionneurs ou P est un entier compris entre 2 et 15, de préférence entre 5 et 10, chacune des trames correspondant à la représentation de l'environnement dans un plan de profondeur incrémental.

De préférence, lesdits moyens d'acquisition d'un environnement sont constitués par une monture de lunettes portant une ou deux caméras.

L'invention concerne aussi un procédé de traitement de la représentation numérique d'un environnement visuel pour commander une interface haptique constituée par une ceinture lombaire présentant une surface active de NxM actionneurs, N et M étant des nombres entiers supérieurs ou égal à 10 caractérisé en ce qu'il consiste à calculer pour chaque acquisition dudit environnement visuel une séquence de P trames d'activation desdits actionneurs ou P est un entier compris entre 2 et 15, de préférence entre 5 et 10, chacune des trames correspondant à la représentation de l'environnement dans un plan de profondeur incrémental.

Selon une variante, comporte une étape de calcul d'une image numérique de N et M pixels haptiques dans une direction décalée à un niveau compris entre 10 et 100 cm du sol.

Selon une autre variante, le procédé comporte une étape de calcul pour chaque image numérique d'une séquence de P trames consécutives correspondant à des plan de profondeurs incrémentaux.

De préférence ladite étape de calcul d'une image numérique de N et M pixels haptiques comporte un traitement consistant à affecter à chaque une valeur de densité à chaque pixel haptique correspondant à la valeur de la densité la plus élevée des voxels visuels correspondant au pixel haptique considéré.

Selon une variante, ladite étape de calcul d'une image numérique de N et M pixels haptiques comporte un traitement consistant à affecter une valeur de densité non nulle aux zones de l'image visuelle correspondant à un trou.

Selon une variante, ladite étape de calcul d'une image numérique de N et M pixels haptiques comporte un traitement consistant à affecter une valeur de densité non nulle aux zones de l'image visuelle correspondant à un obstacle par un traitement de reconnaissance automatique.

Selon un mode de mise en œuvre particulier, ladite étape de calcul d'une image numérique de N et M pixels haptiques comporte un traitement consistant à éliminer les voxels extérieurs à un couloir de circulation de l'utilisateur préalablement au calcul de ladite image numérique de N et M pixels haptiques, établie à partir des voxels subsistant seulement.

De préférence, la position des voxels est modifié suivant la profondeur pour prendre en compte intégralement la capacité d'affichage.

De préférence, ladite étape de calcul d'une image numérique de N et M pixels haptiques comporte un traitement consistant à réduire les voxels traités en fonction d'un paramètre comprenant la vitesse de déplacement de l'utilisateur et/ou la vitesse de déplacement des objets dans le champ du moyen d'acquisition visuel et/ou de la distance desdits objets, préalablement au calcul de ladite image numérique de N et M pixels haptiques, établie à partir des voxels subsistant seulement.

Selon une variante le procédé comporte une étape de calcul pour transformer les distances par rapport à la caméra en distances par rapport à l'utilisateur.

Selon un mode de mise en œuvre particulier, la salve d'images en cours de traitement est recalculée en cas de modification de l'orientation de la direction d'observation de l'environnement.

### Description détaillée d'un exemple non limitatif de réalisation de l'invention

La présente invention sera décrite de manière plus détaillée en référence à des exemples non limitatifs de réalisation précisant les avantages et considérations susmentionnés. Une description plus particulière de l'invention brièvement décrite ci-dessous.

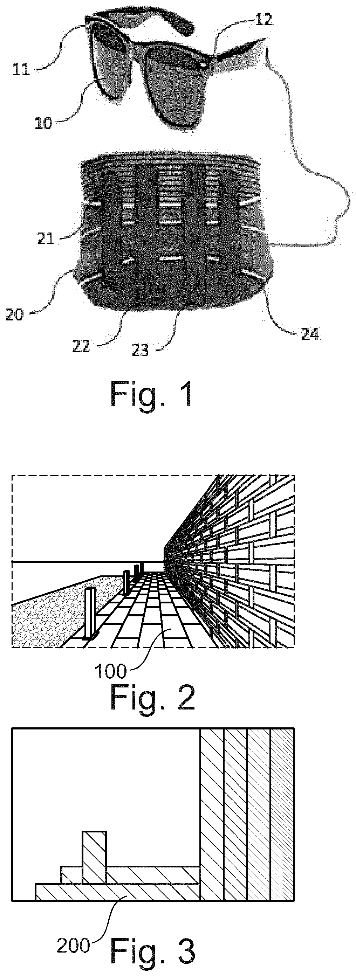

[FIG. 1] la figure 1 représente une vue schématique du système selon l'invention
[FIG. 2] la figure 2 représente une vue d'une image visuelle
[FIG. 3] la figure 3 représente une vue d'une image haptique
[FIG. 4] la figure 4 représente une vue d'une séquence de trames haptiques
[FIG. 5] la figure 5 représente une vue schématique d'un tunnel vertical
[FIG. 6] la figure 6 représente une vue schématique du champ de vue en fonction de la vitesse de déplacement
[FIG. 7] la figure 7 représente une vue schématique d'un tunnel horizontal
[FIG. 8] la figure 8 représente un exemple d'algorithme pour le traitement du champ de vision horizontal
[FIG. 9] la figure 9 représente un exemple d'algorithme pour l'application de l'image haptique
[FIG. 10] la figure 10 représente un exemple d'algorithme pour l'application de l'image haptique accélérée

### Principe général de l'invention

L'exemple développé ci-après, à titre non limitatif, comprend un moyen d'acquisition de l'environnement, par exemple une monture de lunettes (10) équipées de caméras (11, 12) servant à acquérir en temps réel des données sur l'environnement pour fournir des images numériques qui commande les actions d'un transducteur haptique. Le transducteur haptique génère des actions sous forme de pressions sur la peau par des actionneurs électromagnétiques ou électromécaniques, ou encore sous forme d'impulsions électriques, ou lumineuse).

Il est rappelé que le système objet de l'invention peut aussi être utilisé pour des applications de jeux ou d'entraînement en réalité augmenté, avec des images fournies par une source vidéo.

Un calculateur se charge de récupérer les images provenant de la partie Capteur, puis de générer une carte de profondeur 3D à partir de ces dernières. Elle transmet cette carte à un équipement haptique, qui comporte par exemple une grille de solénoïdes ou picots (petits actionneurs linéaires pouvant se lever ou s'abaisser), intégrée dans une ceinture dorsale (20). Cette ceinture (20) est équipée d'un ensemble de solénoïdes disposés sur des supports (21 à 24) pour former une matrice, par exemple de 20 x 40 pixels. Ces solénoïdes sont disposés pour former une matrice régulière, avec un pas constant de préférence. Un circuit électronique reçoit les signaux visuels et assure les traitements pour commander les solénoïdes afin de produire sur le dos de l'utilisateur des sensations faciles à interpréter après une période d'apprentissage. La ceinture lombaire (20) peut être portée sur un vêtement en tissu léger (chemise, polo, blouse) ou à même la peau.

La surface de la matrice active formée par les solénoïdes couvre une région lombaire étendue pour bénéficier d'une bonne résolution et d'un confort d'utilisation satisfaisant.

La restitution de l'image de l'environnement réel en images haptiques consiste à diviser la carte de profondeur calculée à partir de l'image visuelle en plusieurs calques successifs déterminant des images virtuelles ou haptiques commandant l'activation de l'équipement haptique : ainsi, les objets les plus proches sont d'abord affichés, puis les objets légèrement plus éloignés, et ainsi de suite jusqu'à arriver à la distance de vue maximale choisie (avoisinant généralement les 10 mètres). Ainsi, on dispose en quelque sorte d'un scan de l'environnement qui s'enfonce progressivement et qui affiche à chaque instant ce qu'il rencontre. Ce scan se traduit par une salve d'images virtuelles d'une durée d'environ 100 millisecondes, composée d'une dizaine d'images haptiques correspondant à des plans consécutifs, avant de reprendre avec une nouvelle salve correspondant à l'environnement nouveau, consécutif du déplacement de l'utilisateur ou du changement d'orientation de l'image réelle, du fait d'une modification de la position de la tête ou de l'image vidéo.

### Traitement de l'image visuelle

Les caméras (11, 12) procèdent à l'acquisition d'images binoculaires permettant de reconstruire une image numérique, avec une information de profondeur. Un premier traitement consiste à construire une image en niveau de gris. Pour chaque pixel de l'image optique (100) est transcrite une image haptique (200) en niveau de gris en fonction de la distance de chaque point par rapport à la caméra.

L'information de profondeur peut aussi être déterminée avec une seule caméra avec un traitement d'image approprié.

Il est à noter que cette image haptique (200) pourrait également, sans sortir de l'invention, être calculée à partir de l'image numérique fournie par un lidar.

Cette image haptique (200) fait ensuite l'objet d'une décomposition en une séquence de trames haptiques (301 à 307) incrémentale, chacune correspondant à un plan de profondeur. La première trame haptique (301) de la séquence correspond aux zones d'obstacle dans le plan le plus proche de l'utilisateur, la seconde première trame haptique (301) de la séquence correspond aux zones d'obstacle dans le plan le plus proche de l'utilisateur, la trame haptique (302) suivante correspondant aux zones d'obstacle dans le plan suivant, décalé du précédent d'un pas, par exemple de 30 centimètres en distance et ainsi de suite.

Le niveau de gris des trames haptiques (301 à 307) code le type d'action du solénoïde correspondant, par exemple la fréquence de la vibration ou la durée de la vibration pendant la durée d'activation de la trame haptique correspondante.

Une image haptique (200) est ainsi traduite en un balayage temporel de trames haptiques (301 à 307) qui sont intégrées par l'utilisateur pour percevoir une représentation en profondeur de son environnement.

D'autres traitements sont appliqués pour améliorer l'intelligibilité des perceptions tactiles :
- Redressement de l'image visuelle (100) pour créer une image de synthèse ramenée à une observation selon un axe horizontal descendu au niveau des jambes de l'utilisateur, à quelques dizaines de centimètres du sol
- Renforcement sur l'image visuelle (100) des pixels correspondant à des obstacles de petites dimensions, afin d'occuper au moins un pixel de l'image haptique (200).
- Retraitement des trous pour renforcer le niveau de gris de la zone correspondante sur l'image haptique (200)
- Renforcement du niveau de gris sur l'image haptique (200) de zone d'intérêt déterminée par une reconnaissance automatique par exemple par apprentissage supervisé.

### Exemples de traitements pour la production de l'image haptique (200).

Des exemples de traitement seront décrits ci-après, avec les variables suivantes :
- M désigne la matrice haptique appliquée à l'utilisateur
- H désigne la hauteur de cette matrice haptique M (en pixels)
- W désigne la largeur de cette matrice haptique M (en pixels)
- p désigne le niveau de précision
- DM désigne la carte de profondeur récupérée par les capteurs (11, 12)
- dmH désigne hauteur de la carte de profondeur récupérée (en pixels) = p*H dmW désigne largeur de la carte de profondeur récupérée (en pixels) = p*W FOVv désigne le champ de vision vertical de la caméra utilisée (en degrés)
- FOVh désigne le champ de vision horizontal de la caméra utilisée (en degrés)
- hu désigne la hauteur à laquelle est placée la caméra (taille de l'utilisateur prise au niveau des yeux)
- DISTANCE_MAX désigne la distance de vue maximale réglée par l'utilisateur
- SPEED désigne la vitesse d'affichage réglée par l'utilisateur
- PAUSE_TIME désigne le temps de pause entre l'affichage de 2 images (réglé par l'utilisateur)
- MAT[x, y] correspond à la valeur de la matrice MAT aux coordonnées [x, y].
- MAT[x] correspond à la xième colonne de la matrice MAT LIST[x] correspond à la xième valeur de la liste LIST

x = f(arguments) signifie que la valeur de x est fonction de 1 ou plusieurs arguments (relation de proportionnalité)
// signifie que ce qui est écrit après est un commentaire

### Etape 1 : Obtention d'une carte de profondeur

Cette première étape consiste à calculer une carte de profondeur de profondeur de taille dmW*dmH à partir des deux images acquises par les caméras (11) et (12) ou par un lidar, ou par une source d'images virtuelles binoculaires.

Il s'agit de traitements connus, comportant généralement :
a) Une étape d'acquisition de deux images de la même scène au même moment par deux caméras (11, 12) dont l'écartement est connu, ou bien d'images successives provenant du même capteur.
b) Une étape de calibrage consistant à déterminer les paramètres internes et externes du modèle géométrique du capteur stéréoscopique
c) Une étape de mise en correspondance de pixels pour retrouver sur les deux images les paires de pixels qui correspondent à la projection d'un même élément de la scène,
d) Une étape de reconstruction 3D consistant à calculer pour chaque pixel la position dans l'espace du point qui s'est projeté en ce pixel.

Le résultat de cette première étape est une image visuelle (100) de taille dmW*dmH où chaque point est constitué par un voxel définit par ses coordonnées dans l'espace dont l'origine est au niveau de la tête de l'utilisateur, et les axes x et y perpendiculaires à la ligne de visée des caméras, et la coordonnées z la distance par rapport à la tête de l'utilisateur.

### Réduction de la résolution de la matrice sans perte d'informations importantes

L'objectif de ce traitement est de réduire la taille de la carte de profondeur récupérée par le capteur, afin qu'elle prenne la taille de l'afficheur lombaire (la matrice de picots). Le problème avec une réduction de résolution classique, c'est que certaines informations peuvent être perdues. Par exemple, si un poteau très fin se trouve face à l'utilisateur il ne serait pas forcément affiché, ce qui représenterait un gros problème de sécurité. Pour remédier à ce problème, nous utilisons l'algorithme de réduction de résolution suivant, qui possède l'avantage de garder l'objet le plus proche (donc le plus important) de chaque zone. Cet algorithme prend en entrée la carte de profondeur de résolution dmW*dmH et renvoie une matrice de résolution W*H.'

Ce traitement peut être exécuté par le code suivant :

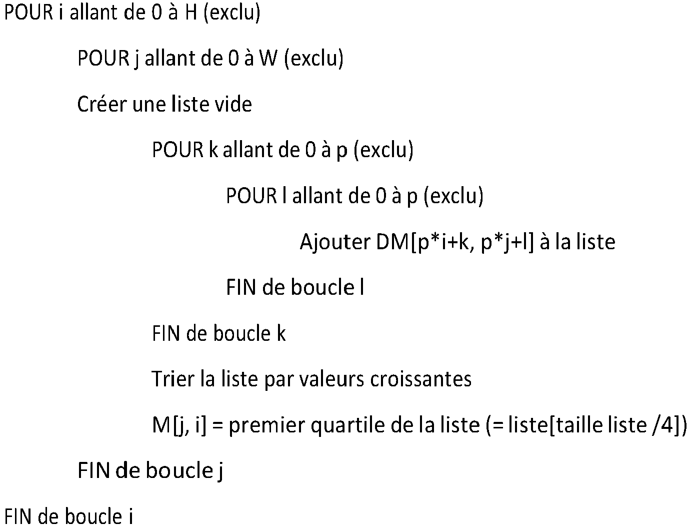

### Traitement de détection de trous dans le sol

Pour un utilisateur, repérer un trou dans la chaussée par la perception de l'absence d'activation de certains solénoïdes n'est pas aisé car l'absence d'information est très dure à percevoir. Une solution consiste à repérer les trous et modifier le niveau de gris des pixels correspondant dans l'image haptique. Un tel traitement peut être exécuté par un programme dont l'algorithme qui repère les trous et envoie leur position à la partie affichage est détaillée ci-après :

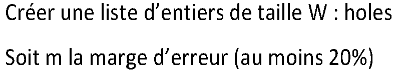

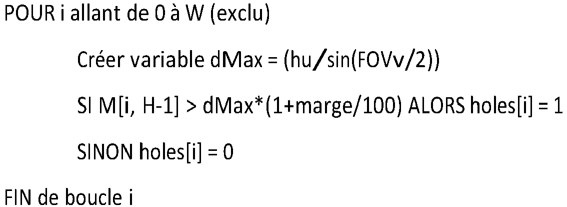

### Transmission de holes à la partie affichage

De la même manière et grâce à l'intelligence artificielle et du traitement d'image, on peut générer une liste asperities des positions des obstacles trop petits pour être affichés (racine, trottoir fin,...)

### Transformation des distances

Un autre traitement concerne la transformation des distances par rapport à la caméra en distances par rapport à l'utilisateur.

La perception humaine des distances se fait par rapport au corps entier et non aux yeux. Cette transformation est normalement réalisée intuitivement par le cerveau. Dans le cadre de la présente invention, ce redressement est en amont pour simplifier le processus de vision par la peau, par un traitement dont l'algorithme est par exemple le suivant. (pourquoi pas de figure?)

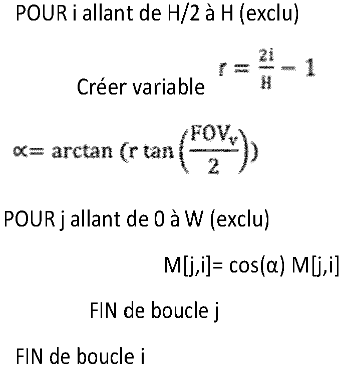

### Traitement « vision tunnel »

Nos yeux perçoivent tout ce qui est visible dans notre champ de vision mais notre cerveau ne traite pas toutes les informations : c'est la différence entre voir et regarder.

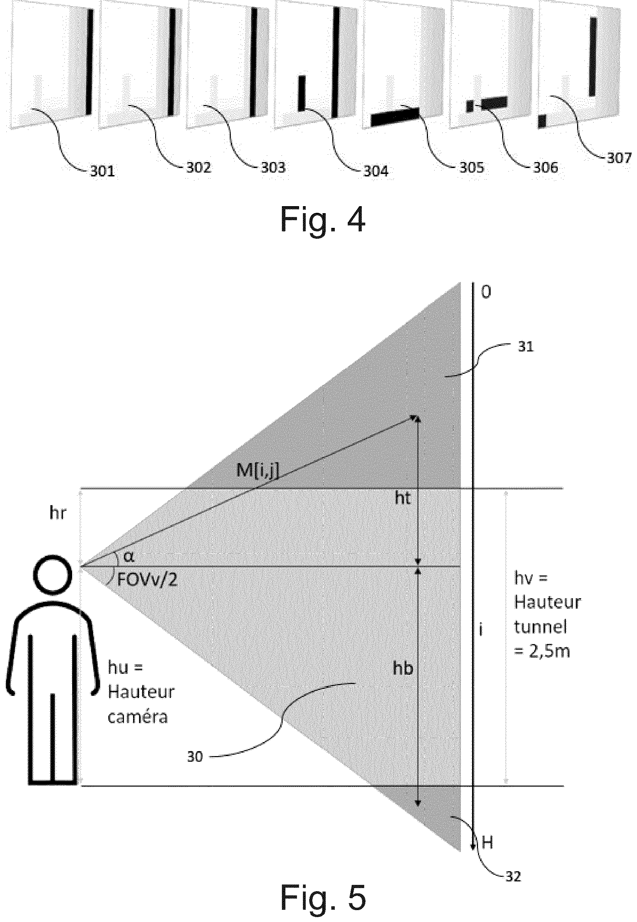

Pour éviter la surcharge d'informations, l'invention prévoit un traitement pour limiter les informations uniquement sur les obstacles présents dans un « couloir virtuel » (30) en face de l'utilisateur, et supprime les informations peu utiles (31, 32) (voir figure 5). Ensuite il réadapte la matrice ainsi tronquée, afin que les informations gardées utilisent toute la matrice d'affichage.

Ce traitement est exécuté par un programme correspondant à l'algorithme suivant :

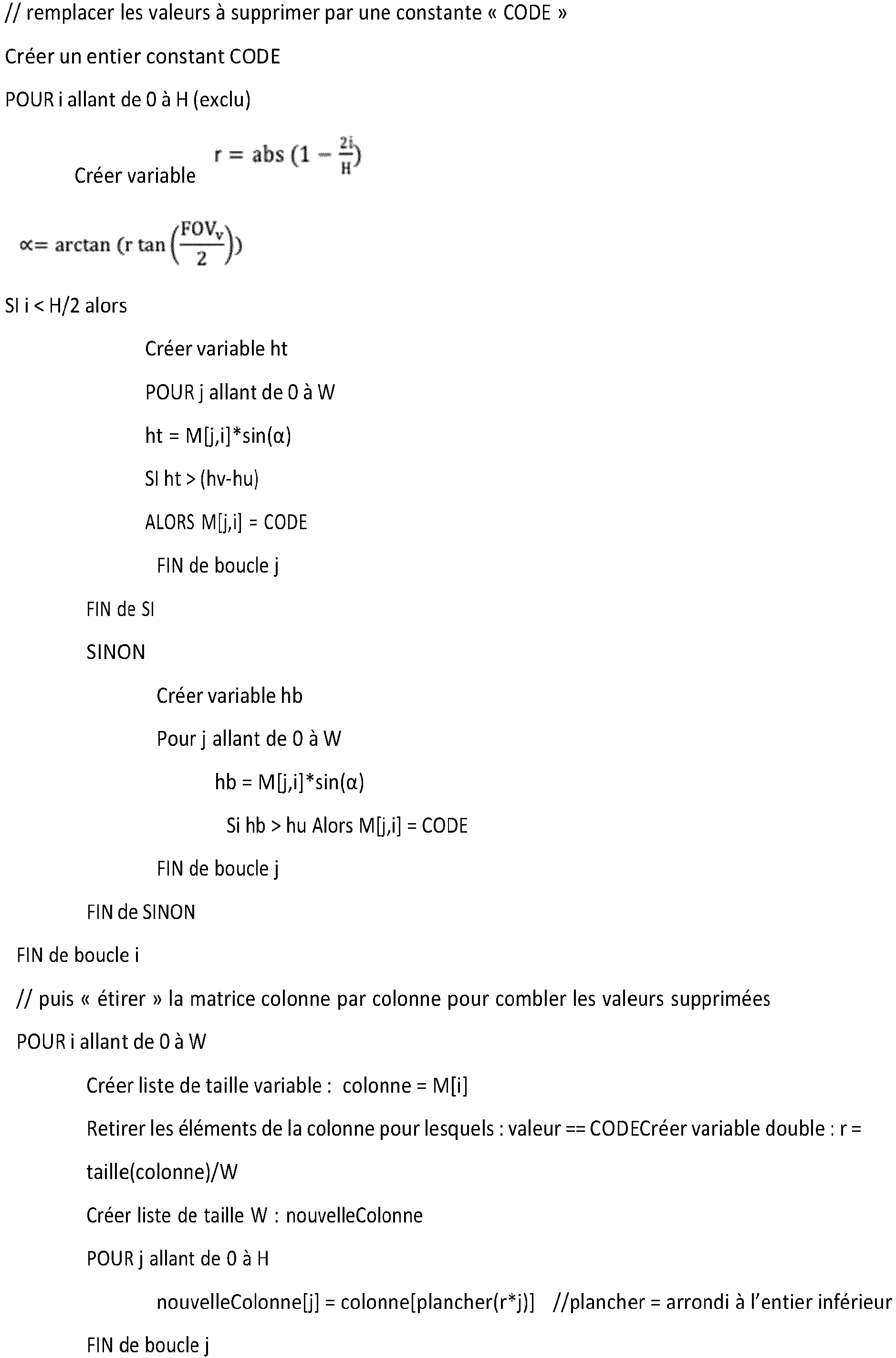

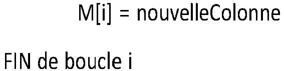

### Traitement « champ de vision horizontal »

De même que pour l'axe vertical détaillé ci-dessus, l'intégralité du champ de vision horizontal n'est pas toujours utile et peut provoquer de la surcharge d'informations. Cependant, certaines informations ne doivent pas être perdues, c'est pourquoi il n'est pas question de définir un couloir comme précédemment. Ici, la réduction de la vision est dépendante de plusieurs paramètres visés dans l'algorithme :
- La vitesse de l'utilisateur
- La vitesse des objets
- La distance des objets

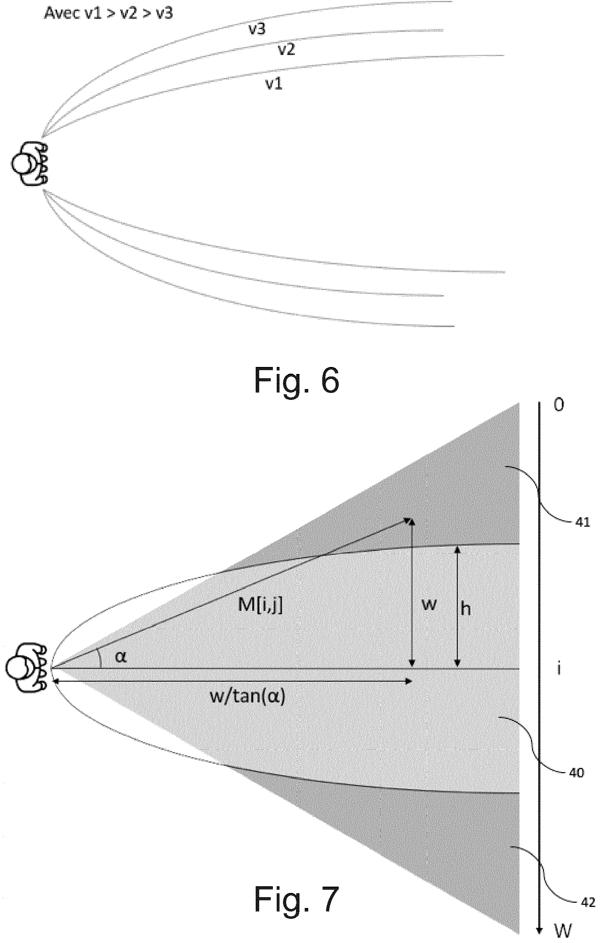

La figure 6 illustre la vision du dessus : plus la vitesse v de l'utilisateur est grande et plus le champ de vision se rétrécit. La figure 7 illustre les zones éliminées (41, 42) et la zone préservée (40).

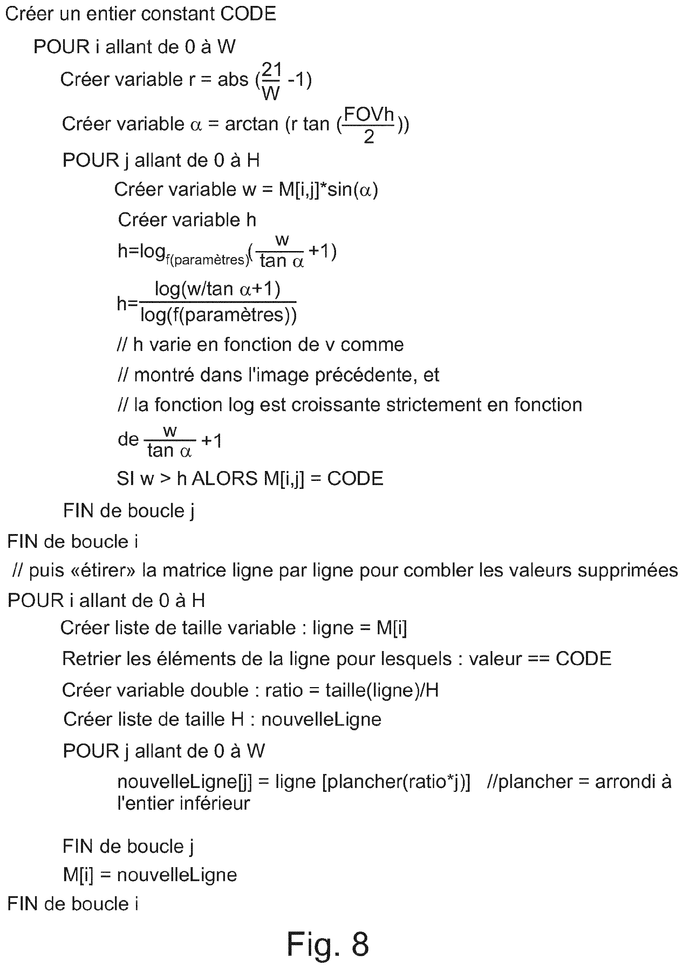

L'algorithme du traitement est par exemple décrit en figure 8.

### Traitement d'application d'une matrice

Dans cet affichage, tout se fait en fonction de la distance de l'objet le plus proche constaté dans le champ de vision. En effet trois valeurs en dérivent :
- maxTime : qui délimite le temps que doit prendre l'affichage total de l'image (l'affichage passe à l'image suivante si le temps est écoulé) ce qui permet à l'utilisateur de savoir intuitivement s'il est proche d'un obstacle
- maxDistance : qui délimite la distance maximale de vue. L'algorithme effectue en effet un focus sur les objets les plus proches pour éviter une surcharge d'informations. Par exemple, si l'obstacle le plus proche se situe à 1m de l'utilisateur, alors le programme va afficher seulement les obstacles entre 1 et 2.5m de distance.
- distanceParCalque : Pour afficher une image en 3D, l'algorithme va afficher successivement des calques en 2D très rapidement. Par exemple il affiche un premier calque avec les objets compris entre 0 et 30cm, puis ceux entre 30cm et 60cm et ainsi de suite. Pour que cette distance reste cohérente par rapport au contexte, elle évolue proportionnellement à closest(?).

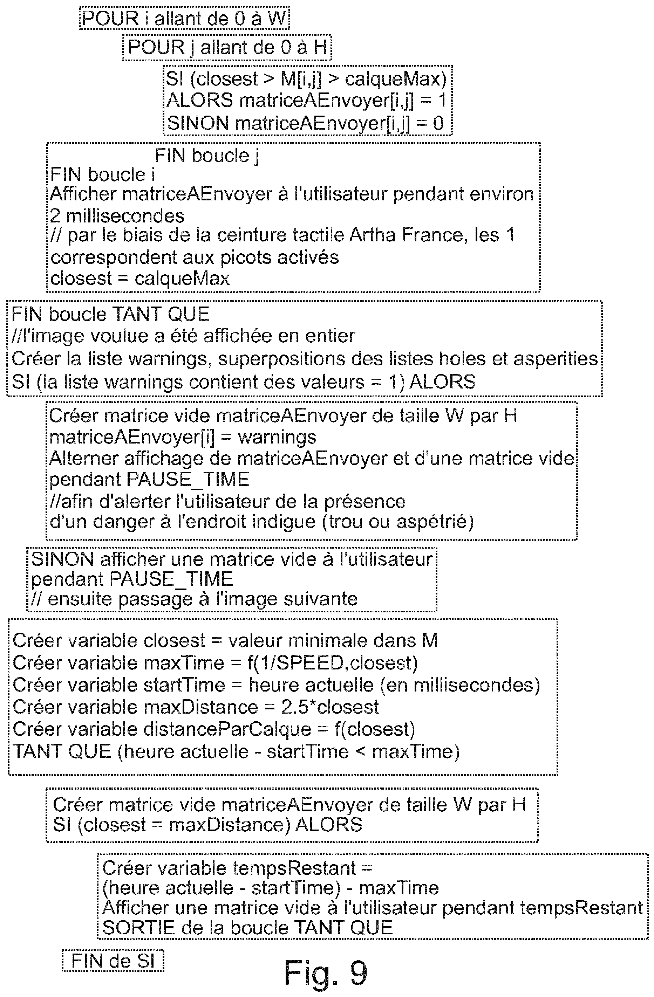

La figure 9 illustre un exemple d'algorithme.

### Affichage dynamique

Pour les utilisateurs qui le souhaitent, un mode d'affichage plus rapide mais requérant plus d'apprentissage est disponible.

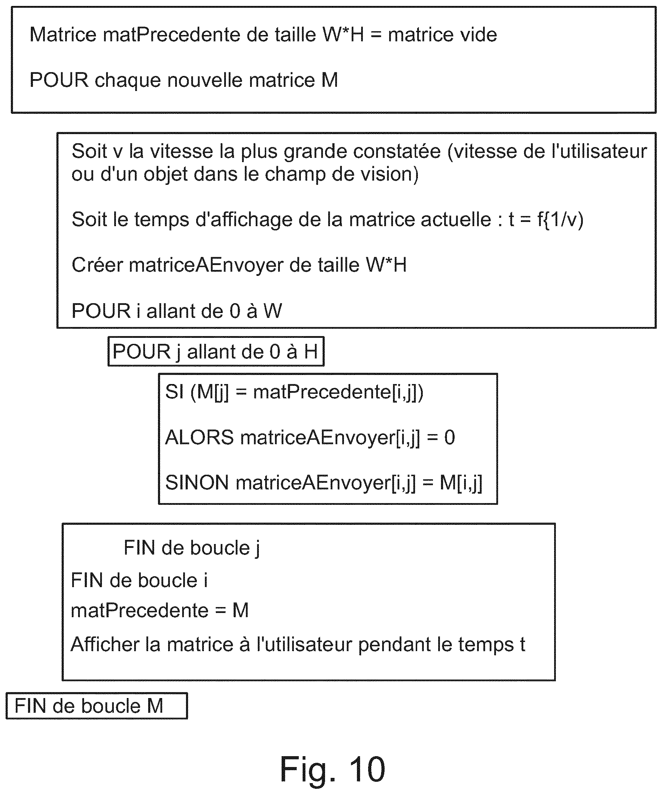

Dans ce mode, l'algorithme en charge de l'affichage actualise uniquement les variations de la matrice actuelle par rapport à la précédente. Donc si tout est statique rien ne sera affiché, mais dès qu'un objet ou lui-même bouge, l'utilisateur verra les changements. Ce traitement est illustré par la figure 10.

### Flou de mouvement

La matrice envoyée à l'utilisateur peut se mettre à jour avant d'avoir été complétement affiché et continuer de s'afficher. L'affichage d'une salve s'effectue en 100 millisecondes environ. Si l'utilisateur tourne la tête en cours d'application de la séquence, une variante consiste à recalculer les images virtuelles et appliquer la salve modifiée à partir de la nouvelle orientation de la caméra.

### Personnalisation des paramètres

La sensibilité tactile de la zone dorsale et l'intelligibilité des excitations haptiques varie d'un individu à l'autre. De façon à faciliter l'apprentissage et l'appropriation par un utilisateur de ce mode de guidage, l'invention prévoit optionnellement une couche de paramétrage pour optimiser l'adaptation à un utilisateur particulier. Cette couche logiciel de paramétrage consiste à déterminer les modalités de conversion de l'image réelle en images virtuels correspondant aux calques de profondeurs, notamment la périodicité des salves, la durée d'application haptique de chaque image virtuelle de profondeur, l'introduction éventuelle d'une image virtuelle de début et/ou de fin de salve, la résolution des images virtuelles, etc.

Ces paramètres peuvent être définies par un traitement d'apprentissage supervisé, à partir d'un parcours de référence et de prise en compte du type d'erreur de l'utilisateur.

## Revendications

1. - Système (10, 20) d'aide à l'orientation comprenant des moyens d'acquisition d'un environnement visuel réel ou virtuel, des moyens d'interface homme-machine non visuelle et des moyens de traitement de la représentation numérique dudit environnement visuel pour fournir un signal électrique de commande d'une interface haptique, lesdits moyens de traitement de la représentation numérique consistant à extraire périodiquement au moins un motif numérique d'activation impulsionnel d'un sous-ensemble des picots de ladite zone haptique **caractérisé en ce que**
▪ ladite interface haptique est constituée par une ceinture lombaire (20) présentant une surface active de NxM picots, N et M étant des nombres entiers supérieurs ou égal à 10,
▪ et **en ce que** ledit moyen de traitement fourni pour chaque acquisition dudit environnement visuel une séquence de P trames d'activation desdits picots ou P est un entier compris entre 2 et 15, de préférence entre 5 et 10, chacune des trames correspondant à la représentation de l'environnement dans un plan de profondeur incrémental.

2. - Système d'aide à l'orientation comprenant des moyens d'acquisition d'un environnement visuel réel ou virtuel selon la revendication 1 **caractérisé en ce que** lesdits picots sont activés par des solénoïdes.

3. - Système d'aide à l'orientation comprenant des moyens d'acquisition d'un environnement visuel réel ou virtuel selon la revendication 1 **caractérisé en ce que** lesdits moyens d'acquisition d'un environnement sont constitués par une monture de lunettes (10) portant une ou deux caméras (11, 12).

4. - Procédé de traitement de la représentation numérique d'un environnement visuel pour commander une interface haptique constituée par une ceinture lombaire (20) présentant une surface active de NxM actionneurs, N et M étant des nombres entiers supérieurs ou égal à 10 **caractérisé en ce qu'**il consiste à calculer pour chaque acquisition dudit environnement visuel une séquence de P trames d'activation desdits picots ou P est un entier compris entre 2 et 15, de préférence entre 5 et 10, chacune des trames correspondant à la représentation de l'environnement dans un plan de profondeur incrémental.

5. - Procédé de traitement de la représentation numérique d'un environnement visuel pour commander une interface haptique selon la revendication 4 **caractérisé en ce qu'**il comporte une étape de calcul d'une image numérique de N et M pixels haptiques dans une direction décalée à un niveau compris entre 10 et 100 cm du sol.

6. - Procédé de traitement de la représentation numérique d'un environnement visuel pour commander une interface haptique selon la revendication 4 ou 5 **caractérisé en ce qu'**il comporte une étape de calcul pour chaque image numérique d'une séquence de P trames consécutives correspondant à des plan de profondeurs incrémentaux.

7. - Procédé de traitement de la représentation numérique d'un environnement visuel pour commander une interface haptique selon la revendication 4 ou 5 **caractérisé en ce que** ladite étape de calcul d'une image numérique de N et M pixels haptiques comporte un traitement consistant à affecter à chaque une valeur de densité à chaque pixel haptique correspondant à la valeur de la densité la plus élevée des voxels visuels correspondant au pixel haptique considéré.

8. - Procédé de traitement de la représentation numérique d'un environnement visuel pour commander une interface haptique selon la revendication 4 ou 5 **caractérisé en ce que** ladite étape de calcul d'une image numérique de N et M pixels haptiques comporte un traitement consistant à affecter une valeur de densité non nulle aux zones de l'image visuelle correspondant à un trou.

9. - Procédé de traitement de la représentation numérique d'un environnement visuel pour commander une interface haptique selon la revendication 4 ou 5 **caractérisé en ce que** ladite étape de calcul d'une image numérique de N et M pixels haptiques comporte un traitement consistant à affecter une valeur de densité non nulle aux zones de l'image visuelle correspondant à un obstacle par un traitement de reconnaissance automatique.

10. - Procédé de traitement de la représentation numérique d'un environnement visuel pour commander une interface haptique selon la revendication 4 ou 5 **caractérisé en ce que** ladite étape de calcul d'une image numérique de N et M pixels haptiques comporte un traitement consistant à éliminer les voxels extérieurs à un couloir de circulation de l'utilisateur préalablement au calcul de ladite image numérique de N et M pixels haptiques, établie à partir des voxels subsistant seulement.

11. - Procédé de traitement de la représentation numérique d'un environnement visuel pour commander une interface haptique selon la revendication 4 ou 5 **caractérisé en ce que** ladite étape de calcul d'une image numérique de N et M pixels haptiques comporte un traitement consistant à réduire les voxels traités en fonction d'un paramètre comprenant la vitesse de déplacement de l'utilisateur et/ou la vitesse de déplacement des objets dans le champs du moyens d'acquisition visuel et/ou de la distance desdits objets, préalablement au calcul de ladite image numérique de N et M pixels haptiques, établie à partir des voxels subsistant seulement.

12. - Procédé de traitement de la représentation numérique d'un environnement visuel pour commander une interface haptique selon la revendication 4 **caractérisé en ce qu'**il comporte une étape de calcul pour transformer les distances par rapport à la caméra en distances par rapport à l'utilisateur.

13. - Procédé de traitement de la représentation numérique d'un environnement visuel pour commander une interface haptique selon la revendication 4 **caractérisé en ce que** la salve d'images en cours de traitement est recalculée en cas de modification de l'orientation de la direction d'observation de l'environnement.

14. - Procédé de traitement de la représentation numérique d'un environnement visuel pour commander une interface haptique selon la revendication 4 **caractérisé en ce que** la position des voxels est modifié suivant la profondeur pour prendre en compte intégralement la capacité d'affichage.

## Patentansprüche

1. System (10, 20) zur Orientierungshilfe, umfassend Mittel zur Erfassung einer realen oder virtuellen visuellen Umgebung, Mittel für eine nicht-visuelle Mensch-Maschine-Schnittstelle und Mittel zur Verarbeitung der digitalen Abbildung der visuellen Umgebung, um ein elektrisches Steuersignal für eine haptische Schnittstelle bereitzustellen, wobei die Mittel zur Verarbeitung der digitalen Abbildung darin bestehen, periodisch mindestens ein digitales impulsförmiges Aktivierungsmuster einer Teilmenge der Stifte des haptischen Bereichs zu extrahieren, **dadurch gekennzeichnet, dass**
▪ die haptische Schnittstelle durch einen Lendengurt (20) gebildet wird, der eine aktive Oberfläche von NxM Stiften aufweist, wobei N und M ganze Zahlen größer oder gleich 10 sind,
▪ und dadurch, dass das Verarbeitungsmittel für jede Erfassung der visuellen Umgebung eine Sequenz von P Aktivierungsframes der Stifte bereitstellt, wobei P eine ganze Zahl zwischen 2 und 15 ist, vorzugsweise zwischen 5 und 10, wobei jeder der Frames der Abbildung der Umgebung in einer inkrementellen Tiefenebene entspricht.

2. Orientierungshilfesystem, umfassend Mittel zur Erfassung einer realen oder virtuellen visuellen Umgebung nach Anspruch 1,
**dadurch gekennzeichnet, dass** die Stifte durch Solenoide aktiviert werden.

3. Orientierungshilfesystem, umfassend Mittel zur Erfassung einer realen oder virtuellen visuellen Umgebung nach Anspruch 1,
**dadurch gekennzeichnet, dass** die Mittel zur Erfassung einer Umgebung durch ein Brillengestell (10) gebildet sind, das eine oder zwei Kameras (11, 12) trägt.

4. Verfahren zur Verarbeitung der digitalen Abbildung einer visuellen Umgebung zum Steuern einer haptischen Schnittstelle, die aus einem Lendengurt (20) gebildet wird, der eine aktive Oberfläche von NxM Aktuatoren aufweist, wobei N und M ganze Zahlen größer oder gleich 10 sind,
**dadurch gekennzeichnet, dass** es darin besteht, für jede Erfassung der visuellen Umgebung eine Sequenz von P Aktivierungsframes der Stifte zu berechnen, wobei P eine ganze Zahl zwischen 2 und 15 ist, vorzugsweise zwischen 5 und 10, wobei jeder der Frames der Abbildung der Umgebung in einer inkrementellen Tiefenebene entspricht.

5. Verfahren zur Verarbeitung der digitalen Abbildung einer visuellen Umgebung zum Steuern einer haptischen Schnittstelle nach Anspruch 4, **dadurch gekennzeichnet, dass** es einen Schritt des Berechnens eines digitalen Bildes aus N und M haptischen Pixeln in einer versetzten Richtung auf einer Höhe zwischen 10 und 100 cm über dem Boden umfasst.

6. Verfahren zur Verarbeitung der digitalen Abbildung einer visuellen Umgebung zum Steuern einer haptischen Schnittstelle nach Anspruch 4 oder 5, **dadurch gekennzeichnet, dass** es einen Schritt des Berechnens für jedes digitale Bild einer Sequenz von P aufeinanderfolgenden Frames umfasst, die inkrementellen Tiefenebenen entsprechen.

7. Verfahren zur Verarbeitung der digitalen Abbildung einer visuellen Umgebung zum Steuern einer haptischen Schnittstelle nach Anspruch 4 oder 5, **dadurch gekennzeichnet, dass** der Schritt des Berechnens eines digitalen Bildes aus N und M haptischen Pixeln eine Verarbeitung umfasst, die darin besteht, jedem haptischen Pixel einen Dichtewert zuzuweisen, der dem höchsten Dichtewert der visuellen Voxel entspricht, die dem betrachteten haptischen Pixel entsprechen.

8. Verfahren zur Verarbeitung der digitalen Abbildung einer visuellen Umgebung zum Steuern einer haptischen Schnittstelle nach Anspruch 4 oder 5, **dadurch gekennzeichnet, dass** der Schritt des Berechnens eines digitalen Bildes aus N und M haptischen Pixeln eine Verarbeitung umfasst, die darin besteht, den Bereichen des visuellen Bildes, die einem Loch entsprechen, einen Dichtewert ungleich null zuzuweisen.

9. Verfahren zur Verarbeitung der digitalen Abbildung einer visuellen Umgebung zum Steuern einer haptischen Schnittstelle nach Anspruch 4 oder 5, **dadurch gekennzeichnet, dass** der Schritt des Berechnens eines digitalen Bildes aus N und M haptischen Pixeln eine Verarbeitung umfasst, die darin besteht, den Bereichen des visuellen Bildes, die einem Hindernis entsprechen, durch eine automatische Erkennungsverarbeitung einen Dichtewert ungleich null zuzuweisen.

10. Verfahren zur Verarbeitung der digitalen Abbildung einer visuellen Umgebung zum Steuern einer haptischen Schnittstelle nach Anspruch 4 oder 5, **dadurch gekennzeichnet, dass** der Schritt des Berechnens eines digitalen Bildes aus N und M haptischen Pixeln eine Verarbeitung umfasst, die darin besteht, die Voxel außerhalb eines Bewegungskorridors des Benutzers vor der Berechnung des digitalen Bildes aus N und M haptischen Pixeln, das nur aus den verbleibenden Voxeln erstellt wird, zu eliminieren.

11. Verfahren zur Verarbeitung der digitalen Abbildung einer visuellen Umgebung zum Steuern einer haptischen Schnittstelle nach Anspruch 4 oder 5, **dadurch gekennzeichnet, dass** der Schritt des Berechnens eines digitalen Bildes aus N und M haptischen Pixeln eine Verarbeitung umfasst, die darin besteht, die verarbeiteten Voxel in Abhängigkeit von einem Parameter zu reduzieren, der die Bewegungsgeschwindigkeit des Benutzers und/oder die Bewegungsgeschwindigkeit der Objekte im Feld des visuellen Erfassungsmittels und/oder die Entfernung der Objekte umfasst, vor der Berechnung des digitalen Bildes aus N und M haptischen Pixeln, das nur aus den verbleibenden Voxeln erstellt wird.

12. Verfahren zur Verarbeitung der digitalen Abbildung einer visuellen Umgebung zum Steuern einer haptischen Schnittstelle nach Anspruch 4, **dadurch gekennzeichnet, dass** es einen Schritt des Berechnens umfasst, um die Abstände relativ zu der Kamera in Abstände relativ zu dem Benutzer umzuwandeln.

13. Verfahren zur Verarbeitung der digitalen Abbildung einer visuellen Umgebung zum Steuern einer haptischen Schnittstelle nach Anspruch 4, **dadurch gekennzeichnet, dass** die in Verarbeitung befindliche Bildfolge im Falle einer Änderung der Ausrichtung der Beobachtungsrichtung der Umgebung neu berechnet wird.

14. Verfahren zur Verarbeitung der digitalen Abbildung einer visuellen Umgebung zum Steuern einer haptischen Schnittstelle nach Anspruch 4, **dadurch gekennzeichnet, dass** die Position der Voxel entsprechend der Tiefe modifiziert wird, um die Anzeigekapazität vollständig zu berücksichtigen.

## Claims

1. An orientation assistance system (10, 20) comprising means for acquiring a real or virtual visual environment, non-visual human-machine interface means and means for processing the digital representation of said visual environment in order to provide an electrical signal for controlling a haptic interface, said digital representation processing means consisting in periodically extracting at least one pulsed digital activation pattern of a subset of pins of said haptic zone, **characterized in that**
▪ said haptic interface is constituted by a lumbar belt (20) with an active surface of NxM pins, N and M being integers greater than or equal to 10,
▪ and **in that** said processing means provides, for each acquisition of said visual environment, a sequence of P activation frames for said pins, where P is an integer from 2 and 15, preferably from 5 and 10, each of the frames corresponding to the representation of the environment in an incremental depth plane.

2. The orientation assistance system comprising means for acquiring a real or virtual visual environment according to claim 1, **characterized in that** said pins are activated by solenoids.

3. The orientation assistance system comprising means for acquiring a real or virtual visual environment according to claim 1, **characterized in that** said means for acquiring an environment are constituted by a spectacle frame (10) carrying one or two cameras (11, 12).

4. A method for processing the digital representation of a visual environment in order to control a haptic interface constituted by a lumbar belt (20) with an active surface of NxM actuators, N and M being integers greater than or equal to 10, **characterized in that** the method consists in calculating, for each acquisition of said visual environment, a sequence of P activation frames for said pins, where P is an integer between 2 and 15, preferably between 5 and 10, each of the frames corresponding to the representation of the environment in an incremental depth plane.

5. The method for processing the digital representation of a visual environment in order to control a haptic interface according to claim 4, **characterized in that** the method comprises a step of calculating a digital image of N and M haptic pixels in a direction offset at a height of from 10 to 100 cm from the ground.

6. The method for processing the digital representation of a visual environment in order to control a haptic interface according to claim 4 or 5, **characterized in that** the method comprises a step of calculating, for each digital image, a sequence of P consecutive frames corresponding to incremental depth planes.

7. The method for processing the digital representation of a visual environment in order to control a haptic interface according to claim 4 or 5, **characterized in that** said step of calculating a digital image of N and M haptic pixels comprises processing consisting in assigning each haptic pixel a density value corresponding to the highest density value of the visual voxels corresponding to the haptic pixel in question.

8. The method for processing the digital representation of a visual environment in order to control a haptic interface according to claim 4 or 5, **characterized in that** said step of calculating a digital image of N and M haptic pixels comprises processing consisting in assigning a non-zero density value to the areas of the visual image corresponding to a hole.

9. The method for processing the digital representation of a visual environment in order to control a haptic interface according to claim 4 or 5, **characterized in that** said step of calculating a digital image of N and M haptic pixels comprises processing consisting in assigning a non-zero density value to the areas of the visual image corresponding to an obstacle by automatic recognition processing.

10. The method for processing the digital representation of a visual environment in order to control a haptic interface according to claim 4 or 5, **characterized in that** said step of calculating a digital image of N and M haptic pixels comprises processing consisting in eliminating the voxels outside a user's traffic lane prior to calculating said digital image of N and M haptic pixels, established from the remaining voxels only.

11. The method for processing the digital representation of a visual environment in order to control a haptic interface according to claim 4 or 5, **characterized in that** said step of calculating a digital image of N and M haptic pixels comprises processing consisting in reducing the processed voxels as a function of a parameter comprising the user's speed of movement and/or the speed of movement of objects in the field of the visual acquisition means and/or the distance of said objects, prior to calculating said digital image of N and M haptic pixels, established from the voxels remaining only.

12. The method for processing the digital representation of a visual environment in order to control a haptic interface according to claim 4, **characterized in that** the method comprises a calculation step for transforming distances relative to the camera into distances relative to the user.

13. The method for processing the digital representation of a visual environment in order to control a haptic interface according to claim 4, **characterized in that** the image burst being processed is recalculated in the event of a change in the orientation of the direction of observation of the environment.

14. The method for processing the digital representation of a visual environment in order to control a haptic interface according to claim 4, **characterized in that** the position of the voxels is modified according to their depth in order to take full account of the display capacity.
